# FASCICULE DE BREVET EUROPEEN

(11) **EP 0 684 752 B1**
(45) Date de publication et mention de la délivrance du brevet: **04.08.1999**
(21) Numéro de dépôt: 95107284.2
(22) Date de dépôt: 13.05.1995
(51) Int. Cl.: H05B 33/08

(54) **Circuit d'alimentation pour une feuille électroluminescente**
Versorgungsschaltung für eine Elektrolumineszenzlage
Power source for an electroluminescent sheet

(30) Priorité: 26.05.1994 CH 162894
(43) Date de publication de la demande: 29.11.1995
(73) Titulaire: Eta SA Fabriques d'Ebauches, 2540 Grenchen (CH)
(72) Inventeur: Damien, Corti, CH-2000 Neuchâtel (CH)
(74) Mandataire: de Montmollin, Henri

(56) Documents cités:
- EP-A- 0 359 245
- WO-A-86/05304
- GB-A- 2 196 805
- US-A- 4 247 854

## Description

La présente invention concerne un circuit d'alimentation pour un film électroluminescent et notamment un circuit d'alimentation pour un film électroluminescent prévu pour fonctionner dans une pièce d'horlogerie alimentée par une pile.

On sait, du brevet US 3'749'977 notamment, que les films électroluminescents présentent sensiblement les mêmes propriétés électriques que les condensateurs et que, en conséquence, l'énergie nécessaire pour alimenter un de ces films électroluminescents peut être réduite si on le connecte avec une inductance dans un circuit résonnant dont la source est ajustée à la fréquence de résonance.

La tension alternative qui doit être fournie aux bornes d'une feuille électroluminescente pour l'alimenter est généralement de plusieurs dizaines de volts, typiquement 75 volts crête à crête. Si l'on désire utiliser, par exemple, comme source d'énergie une pile fournissant nominalement une tension de 1,5 ou de 3 volts, on devra avoir recours à des moyens d'élévation de la tension produisant un gain en tension considérable.

Les moyens pour élever la tension fournie par une pile peuvent naturellement être constitués par un transformateur dont le primaire est alimenté de façon intermittente par la pile et dont le secondaire forme, conformément à ce qui a été dit plus haut, l'inductance d'un circuit résonant LC dont la capacité est formée par la feuille électroluminescente. Dans ces conditions, par sélection du rapport entre le nombre de spires dans le primaire et dans le secondaire du transformateur, on pourra ajuster le gain du transformateur et donc la tension aux bornes de la feuille électroluminescente.

Le brevet US 4'208'869 décrit plusieurs circuits d'alimentation du type ci-dessus. Dans chacun de ces circuits, l'enroulement primaire du transformateur est connecté entre les bornes de la pile en série avec un transistor de commutation, et des impulsions de commande de fréquence appropriée, fournies à la grille du transistor de commutation, commandent le courant à travers le primaire du transformateur.

Une telle configuration présente des défauts. En effet, dans un tel circuit, les connexions de l'enroulement primaire et du transistor de commutation avec la pile ne permettent au courant de circuler que dans un seul sens dans le primaire du transformateur. Dans ces conditions, le courant circulant dans l'enroulement primaire du transformateur n'est pas, à proprement parler, alternatif. Ce courant peut, en fait, être décomposé en la somme d'une composante vraiment alternative et d'une composante continue. La composante continue ne pouvant pas induire de tension dans le secondaire du transformateur, elle est consommée en pure perte.

Un but de la présente invention est donc de fournir un circuit d'alimentation pour une feuille électroluminescente comportant un transformateur dont le primaire peut être alimenté par une pile, et dans lequel le courant circulant dans l'enroulement primaire ne comporte pas de composante continue.

Un autre but de la présente invention est de fournir un circuit d'alimentation pour une feuille électroluminescente pouvant fonctionner avec un transformateur ayant un gain en tension moins élevé.

A cet effet, la présente invention a pour objet un circuit d'alimentation pour une feuille électroluminescente prévu pour être alimenté par une source d'une tension continue et notamment par une pile, comprenant un transformateur comportant d'une part un enroulement primaire et d'autre part un enroulement secondaire prévu pour être connecté entre deux électrodes de ladite feuille électroluminescente de manière à former une boucle LC résonnante, et des moyens de connexion répondant à un signal de commande sensiblement périodique pour appliquer ladite tension continue audit enroulement primaire de manière à engendrer un courant électrique d'intensité sensiblement périodique dans celui-ci, caractérisé en ce que les moyens de connexion sont prévus pour répondre audit signal de commande en commutant cycliquement entre un premier état où ledit courant circule dans l'enroulement primaire dans un premier sens et un deuxième état où ledit courant circule dans l'enroulement primaire dans l'autre sens.

Grâce aux caractéristiques exposées ci-dessus, le sens de circulation du courant dans le primaire s'inversant de manière cyclique, ce dernier est réellement alternatif et n'a pas de composante continue. Dans ces conditions, le taux de transmission de l'énergie électrique du primaire vers le secondaire est optimalisé.

Un autre avantage de la présente invention est que la variation dV de la tension entre les deux extrémités du primaire observée durant le passage des moyens de connexion du premier état vers le deuxième ou vice versa est égale à deux fois la différence de potentiel mesurée entre les bornes de la source de tension. Dans ces conditions, le rapport de transformation exigé du dispositif est réduit de moitié par rapport à un dispositif réalisé, par exemple, d'après les enseignements du document US 4'208'869 déjà mentionné. Grâce à la présente invention, on peut donc utiliser un transformateur ayant un gain en tension plus faible et donc, par exemple, un enroulement secondaire comptant un plus petit nombre de spires. Dans les applications horlogères, l'espace à disposition est très restreint et on utilise normalement pour l'enroulement secondaire du transformateur du fil très fin qui présente une résistance ohmique non négligeable. Une réduction du nombre de spires permet donc d'utiliser du fil plus gros et, en conséquence, de disposer d'un transformateur avec un rendement meilleur.

Selon un mode de réalisation préféré de la présente invention, les moyens d'asservissement comprennent un condensateur intercalé entre une des bornes de l'enroulement primaire et les moyens de connexion, le niveau du potentiel sur celle des armatures dudit condensateur qui est reliée audit enroulement primaire étant utilisé comme signal de commande pour les moyens de connexion.

Selon ce mode de réalisation préféré, le circuit d'alimentation présente une double résonance, une résonance dans la boucle formée par l'enroulement secondaire et la feuille électroluminescente et une résonance dans la boucle comprenant l'enroulement primaire et le condensateur connecté à celui-ci. En sélectionnant un condensateur de capacité adéquate, on peut facilement donner à la fréquence de résonance du primaire une valeur sensiblement égale à celle du secondaire. Ainsi, de manière bien connue, le couplage entre ces deux résonances devient important et le circuit dans son ensemble est asservi à une fréquence de résonance globale qui est pratiquement égale à la fréquence de résonance du secondaire.

De plus, à la résonance, le flux d'induction produit par le courant circulant dans l'enroulement secondaire induit dans le primaire une tension qui est en opposition de phase avec la tension fournie par l'intermédiaire des moyens de connexion. Dans ces conditions, le courant circulant dans l'enroulement primaire est minimisé et la consommation également.

Un autre avantage de ce mode préféré de réalisation de la présente invention est que, la boucle de rétro-action des moyens d'asservissement étant réalisée sur le primaire du transformateur, le sens de bobinage des enroulements du transformateur est indifférent. Les transformateurs utilisés en horlogerie devant être d'extrêmement petites tailles, le fait de ne pas avoir à tenir compte d'une polarité pour les enroulements permet donc de simplifier considérablement les opérations d'assemblage des circuits d'alimentation.

Encore un autre avantage de ce mode préféré de réalisation est que, comme on le verra plus loin, il est très peu sensible aux défauts de fabrication des armatures qui relient inductivement les deux enroulements du transformateur.

D'autres caractéristiques et avantages de la présente invention apparaîtront à la lecture de la description qui va suivre, donnée uniquement à titre d'exemple non limitatif et faite en se référant aux dessins annexés dans lesquels :
- la figure 1 est le schéma d'un circuit d'alimentation d'une feuille électroluminescente selon un premier mode de réalisation de la présente invention;
- la figure 2 est le schéma d'un circuit d'alimentation d'une feuille électroluminescente selon un deuxième mode de réalisation de la présente invention;
- la figure 3 est le schéma d'un circuit d'alimentation d'une feuille électroluminescente selon un troisième mode de réalisation de la présente invention.

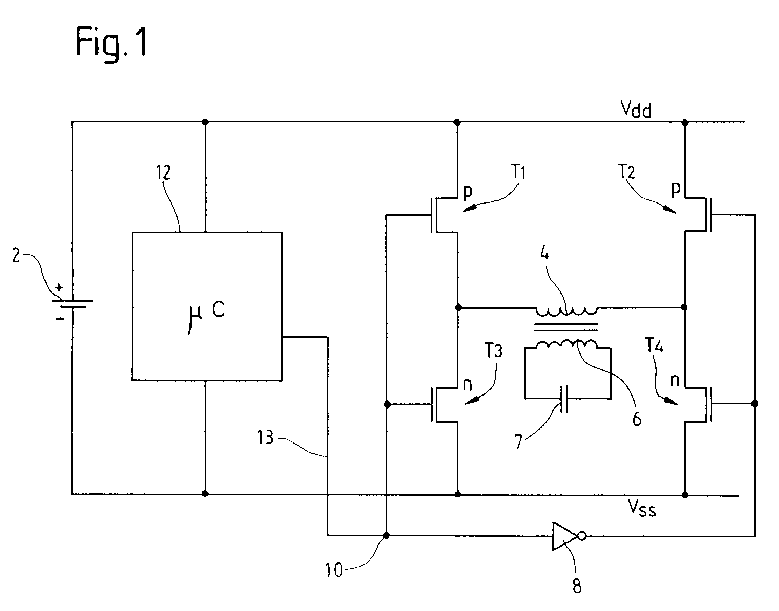

On voit sur la figure 1 un premier exemple de circuit d'alimentation d'une feuille électroluminescente selon la présente invention. Dans cette exemple, l'énergie nécessaire au fonctionnement du circuit est fournie par une pile référencée 2. Lorsque le circuit d'alimentation est incorporé dans une montre électronique, la pile 2 peut avantageusement assurer également l'alimentation en énergie des autres circuits de cette montre.

Le circuit d'alimentation comprend tout d'abord un transformateur à deux enroulements référencés 4 et 6 respectivement. Conformément à la présente invention, les bornes de l'enroulement secondaire 6 sont reliées chacune à l'une des électrodes d'une feuille électroluminescente qui est représentée symboliquement par un condensateur référencé 7 sur la figure 1. Toujours conformément à l'invention, l'enroulement primaire 4 du transformateur est connecté entre les bornes de la pile 2 par l'intermédiaire de moyens de connexion.

Dans le présent exemple, les moyens de connexion sont constitués par deux transistors de commutation de type P référencés T1 et T2 et par deux transistors de commutation de type N référencés T3 et T4. Ces transistors sont reliés ensemble pour former une structure particulière de pont. Ce type particulier de pont, appelé "pont H", est, en soi, bien connu de l'homme du métier. En effet, des ponts H sont utilisés notamment dans des circuits d'alimentation de micromoteurs pas-à-pas.

Dans le présent exemple, les drains des transistors T1 et T3 sont reliés, ensemble, à une borne de l'enroulement primaire 4 du transformateur et les drains des transistors T2 et T4 sont reliés, ensemble, à l'autre borne de l'enroulement 4. Les sources des transistors de type P T1 et T2 sont reliées à la borne positive de la pile 2 et les sources des transistors de type N T3 et T4 sont reliées à la borne négative de la pile 2. Finalement, les grilles des transistors T1 et T3 sont reliées, ensemble, à un noeud de connexion 10 et les grilles des transistors T2 et T4 sont reliées à ce même noeud 10 via un inverseur 8.

Le circuit de la figure 1 comporte encore des moyens de commande prévus pour fournir un signal de commande pour les quatre transistors de commutation du pont H. Dans le présent exemple, ces moyens de commande sont constitués par un micro-régisseur (ou micro-contrôleur) 12 qui est associé à une base de temps et qui comporte une sortie de commande relié aux grilles des transistors T1 et T3 via le noeud de connexion 10 ainsi qu'aux transistors T2 et T4 via ce même noeud 10 et l'inverseur 8. Dans le cas où le circuit d'alimentation est incorporé dans une pièce d'horlogerie électronique, le micro-régisseur 12 peut avantageusement être prévu pour commander également d'autres fonctions de cette montre.

Une montre incorporant le circuit d'alimentation comprendra encore, de préférence, un dispositif de commande (non représenté) actionnable par le porteur de la montre pour enclencher et déclencher le circuit d'alimentation pour la feuille électroluminescente 7. Lorsque le circuit d'alimentation est enclenché, le micro-régisseur 12 émet en direction des transistors de commutation T1 à T4 un signal de commande carré correspondant à une succession d'états logiques hauts et bas. La fréquence de ce signal de commande est prévue pour être sensiblement égale à la fréquence de résonance de la boucle LC formée par le secondaire du transformateur et la feuille électroluminescente 7.

Les grilles des transistors T1 et T3 étant reliées directement au noeud 10, celles-ci reçoivent simultanément la succession d'états logiques hauts et bas fournie par le micro-régisseur 12. Les transistors T2 et T4 étant, quand à eux, reliés au noeud 10 par l'intermédiaire de l'inverseur 8, le signal logique reçu par leurs grilles est en opposition de phase avec celui reçu par les transistors T1 et T3. Enfin, les transistors T1 et T2 étant de type P et les transistors T3 et T4 étant de type N, on comprendra que, lorsque le signal logique fourni par le micro-régisseur est à l'état logique haut, l'enroulement 4 du transformateur est alimenté par la pile 2 par l'intermédiaire des transistors T1 et T4, le courant circulant donc dans un premier sens, et que, lorsque le signal logique est à l'état bas, l'enroulement 4 est alimenté par la pile 2 par l'intermédiaire des transistors T2 et T3, le courant circulant donc dans l'autre sens.

Grâce à la disposition qui vient d'être décrite, la tension alternative qui alimente l'enroulement primaire 4 du transformateur présente une valeur crête à crête qui est égale au double de la différence de potentiel entre les bornes de la pile 2. Grâce à cette caractéristique, le rapport de transformation exigé du transformateur est réduit par rapport aux circuits de l'art antérieur. De plus, le temps de fonctionnement du dispositif étant également partagé entre des demi-périodes où le courant circule dans un sens et des demi-périodes où le courant circule dans l'autre sens, ce courant ne présente pas de composante continue.

On voit encore sur la figure 1 que la feuille électroluminescente 7 forme avec l'enroulement secondaire 6 une boucle LC. Dans ces conditions, si la fréquence du signal de commande produit par le micro-régisseur 12 est sensiblement égale à la fréquence de résonance de cette boucle LC, la tension entre les bornes de la feuille électroluminescente 7 est sensiblement égale à la tension induite dans l'enroulement secondaire 2, cette tension étant déterminée par le rapport de transformation du transformateur.

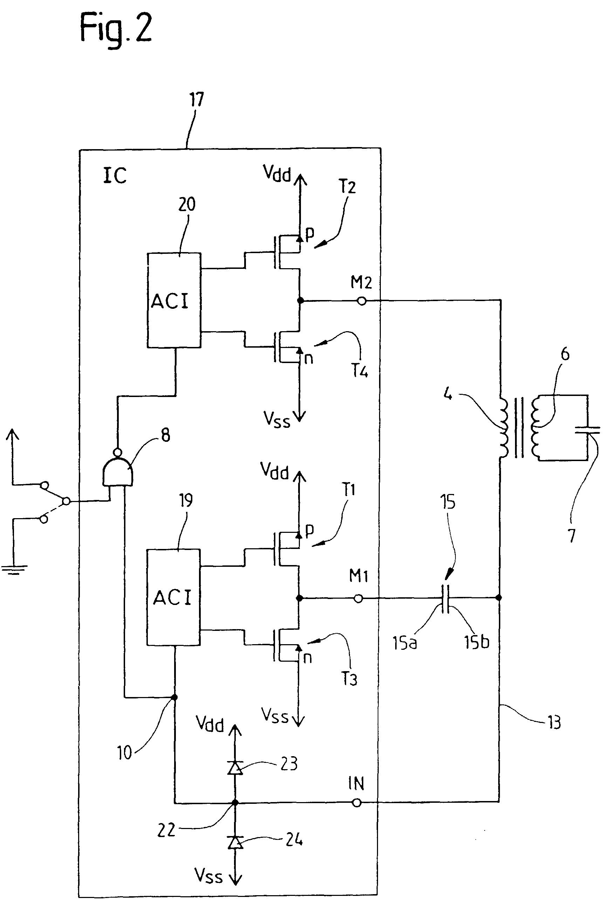

La figure 2 représente un deuxième mode de réalisation du circuit de la présente invention. Les éléments du circuit de la figure 1 qui se retrouvent sur la figure 2 sont repérés par les mêmes numéros de référence.

Les éléments formant le circuit d'alimentation d'une feuille électroluminescente représenté à la figure 2 sont prévus pour être, de préférence, réalisés dans une puce de circuit intégré. Seuls un condensateur référencé 15 et le transformateur comprenant les enroulements 4 et 6 sont, dans cet exemple, réalisés sous forme d'éléments externes à la puce de circuit intégré. L'enroulement 4 et le condensateur 15 sont reliés l'un à l'autre en série et couplés à la puce par deux bornes de connexions référencées M1 et M2. Sur la figure 2, le bord de la puce de circuit intégré est symbolisé par un cadre référencé 17. On voit encore sur la figure 2 que la puce comporte une troisième borne de connexion référencée IN. Cette borne est prévue pour recevoir le signal de commande pour le pont H par une ligne de rétro-action dont l'autre extrémité est reliée à une armature 15b du condensateur 15.

Comme le circuit représenté à la figure 1, le circuit de la figure 2 peut être alimenté notamment par une pile dont la tension détermine la différence entre les deux potentiels d'alimentation (appelés conventionnellement Vdd et Vss). Pour ne pas surcharger le dessin, on n'a pas représenté la pile et les conducteurs qui alimentent les différents éléments du circuit.

Comme dans l'exemple précédent, le transformateur comprend un enroulement secondaire 6, dont les bornes sont reliées chacune à une des électrodes de la feuille électroluminescente 7 à alimenter, et un enroulement primaire 4 connecté entre les deux moitiés d'un pont H.

Dans l'exemple de la figure 2, on voit que, contrairement à ce qui était le cas dans l'exemple précédent, chaque moitié du pont H comprend, en plus des deux transistors de commutation (T1,T3 et T2,T4 respectivement) un module représenté par une boîte rectangulaire (référencées 19 et 20 respectivement). Le module 19 est intercalé entre le noeud 10 et les grilles des transistors T1 et T3, alors que le module 20, qui est identique au module 19, est intercalé entre l'inverseur 8 et les grilles des transistors T2 et T4.

La fonction des modules 19 et 20 est d'éviter qu'à l'instant où le signal de commande fourni par les moyens d'asservissement passe de l'état logique bas à l'état logique haut (ou inversement) le transistor de type P et le transistor de type N constituant une des moitié du pont H ne soient conducteurs en même temps. En effet, la tension nécessaire pour faire changer l'état d'un transistor de commutation n'est jamais définie avec une précision parfaite, et de plus le changement d'état d'un transistor n'est jamais instantané. Dans ces conditions, si l'on ne prend pas de précautions, du courant va s'écouler en pure perte directement entre les transistors de type P et les transistors de type N sans traverser l'enroulement 4. Afin d'éviter ce problème, chacun des modules 19 et 20 est prévu pour, lors de chaque transition, attendre que le transistor conducteur ait eu le temps de se bloquer avant de rendre conducteur le transistor non conducteur. L'homme du métier connaît déjà de tels modules de suppression des courants transversaux sous le nom d'ACI (Anti Current Inverter).

Signalons toutefois que les ACI ne sont absolument pas une caractéristique essentielle pour le présent exemple, le circuit de la figure 2 pouvant très facilement être adapté pour fonctionner sans les ACI.

Le signal de commande fourni aux ACI est engendré par les moyens d'asservissement qui, dans le présent exemple, sont constitués par une ligne de rétro-action référencée 13 qui est reliée à la borne IN de la puce 17. On voit d'autre part sur la figure 2 que le condensateur 15 dont nous avons déjà parlé est connecté en série avec l'enroulement 4 entre les deux moitiés du pont H. Plus précisément, le condensateur 15 a une de ses armatures 15a reliée à une première moitié du pont H via la borne M1 et son autre armature 15b reliée à une des extrémités de l'enroulement 4.

La présence du condensateur 15 et de la ligne de rétro-action 13 transforme l'ensemble formé par le pont H et l'enroulement primaire du transformateur en un circuit oscillant. En effet, le condensateur 15 étant monté dans la "barre horizontale" du H, il reçoit tout le courant circulant entre les deux moitiés du pont. L'effet de ce courant est de charger le condensateur 15 de sorte que le potentiel de son armature 15b qui est reliée à l'enroulement 4 se rapproche progressivement du potentiel fourni, via la borne M2, à l'autre extrémité du l'enroulement 4. Le potentiel sur l'armature 15b du condensateur est transmis par la ligne de rétro-action 13 au noeud 10 et donc aux deux ACI. A l'instant où le potentiel transmis par la ligne 13 atteint la valeur nécessaire pour faire commuter les ACI, la polarité dans le pont H s'inverse et le potentiel de l'armature 15b est brutalement décalé d'une quantité égale à la différence de potentiel entre Vdd et Vss. Ensuite, le courant circulant dans le pont H fait à nouveau progressivement se rapprocher le potentiel de l'armature 15b de celui présent au niveau de la borne M2, jusqu'à ce que le potentiel de l'armature 15b atteigne la valeur nécessaire pour faire à nouveau commuter les ACI.

On comprendra que, dans cet exemple, la fréquence d'oscillation du courant dans le primaire 4 dépend d'une part des caractéristiques d'induction du transformateur et d'autre part de la capacité du condensateur 15. Si la valeur de la capacité du condensateur 15 est judicieusement choisie, les variations du potentiel sur l'armature 15b du condensateur 15 sont, à la résonance, en phase avec les variations du potentiel sur une des électrodes de la feuille électroluminescente 7. A la résonance, le condensateur 15 se comporte donc comme la capacité image de la capacité propre de la feuille électroluminescente 7.

On voit encore sur la figure 2 que la ligne de rétroaction 13 passe par un noeud référencé 22 auquel sont connectées de façon connue deux diodes 23 et 24. La fonction des diodes 23 et 24 et de protéger le circuit intégré contre les surtensions.

Les avantages liés à l'utilisation d'un circuit asservi par une ligne de rétro-action transmettant un signal issu du primaire du transformateur sont multiples. Tout d'abord, le fait d'utiliser une ligne de rétro-action permet de se passer de l'oscillateur externe auquel on a recours notamment dans le mode de réalisation décrit sur la figure 1. D'autre part, le fait que le signal transmis par la ligne de rétro-action 13 est issu du primaire du transformateur rend indifférent le sens de bobinage des enroulements de celui-ci.

Un autre avantage de l'utilisation d'un circuit asservi par une ligne de rétro-action est que cet asservissement rend le bon fonctionnement du circuit selon l'invention peu dépendant le la valeur de la fréquence de résonance.

On sait que la fréquence de résonance du secondaire du transformateur dépend notamment des coefficients d'induction dans le transformateur et donc, en particulier, de la qualité des armatures, réalisées dans un matériau de susceptibilité magnétique élevée, qui, de façon classique, relient inductivement les deux enroulements du transformateur. Or dans les applications horlogères, les armatures pour les enroulements doivent être d'extrêmement petites dimensions. Dans ces conditions, les procédés de fabrications en séries classiques ne permettent pas d'éviter des variations sensibles de performances entre un élément et le suivant. Il est donc difficile d'éviter une variation sensible de la fréquence de résonance entre deux exemplaires d'un même circuit d'alimentation.

La fréquence de résonance pouvant donc être différente pour chaque exemplaire du circuit d'alimentation, un signal de commande de fréquence prédéterminée ne pourra exciter qu'une petite proportion des exemplaires de circuit à la résonance.

Dans l'exemple qui vient d'être décrit en relation avec la figure 2, la fréquence de résonance produite dans le primaire par les moyens d'asservissement doit correspondre à la fréquence de résonance du secondaire. Toutefois, les défauts qui se produisent dans les armatures affectent généralement tous les coefficients d'induction du transformateur de la même façon. En d'autres termes, ces défauts influencent la fréquence de résonance du primaire et celle du secondaire dans une même proportion. Dans ces conditions, la valeur qu'il faut donner à la capacité du condensateur 15 pour accorder le primaire au secondaire dépend presque uniquement du rapport entre le nombre de spires dans les deux enroulements et pratiquement pas des caractéristiques magnétiques des armatures.

Un troisième avantage du mode de réalisation de la figure 2 est que le condensateur 15 présent dans la boucle du primaire interdit tout écoulement continu de charges d'une borne de la pile à l'autre. Dans ces conditions, il suffit de bloquer la commutation cyclique des moyens de connexion commutables pour désactiver complètement le circuit d'alimentation selon l'invention, et la présence du condensateur 15 garantit que la consommation du circuit au repos est quasiment nulle. Pour mettre à profit ce dernier avantage, l'inverseur 8 visible sur la figure 1 est remplacé sur la figure 2 par une porte NON-ET également référencée 8. La deuxième entrée de la porte NON-ET (celle qui ne reçoit pas le signal d'asservissement) reçoit un signal logique de commande permettant d'activer ou de désactiver le circuit d'alimentation. Lorsque le signal de commande sur la deuxième entrée de la porte NON-ET 8 est au niveau "1", celle-ci se comporte comme un inverseur classique pour le signal sur sa première entrée. Lorsque le signal de commande sur la deuxième entrée est au niveau "0", la porte NON-ET fournit un "1" logique en sortie quel que soit le niveau du signal sur sa première entrée. Les moyens de connexion ne peuvent donc plus commuter et le circuit d'alimentation est donc désactivé.

En outre, aucune ligne ne reliant, dans ce mode de réalisation, le secondaire du transformateur à une autre partie du circuit, il est possible de mettre une des électrodes de la feuille électroluminescente à la masse.

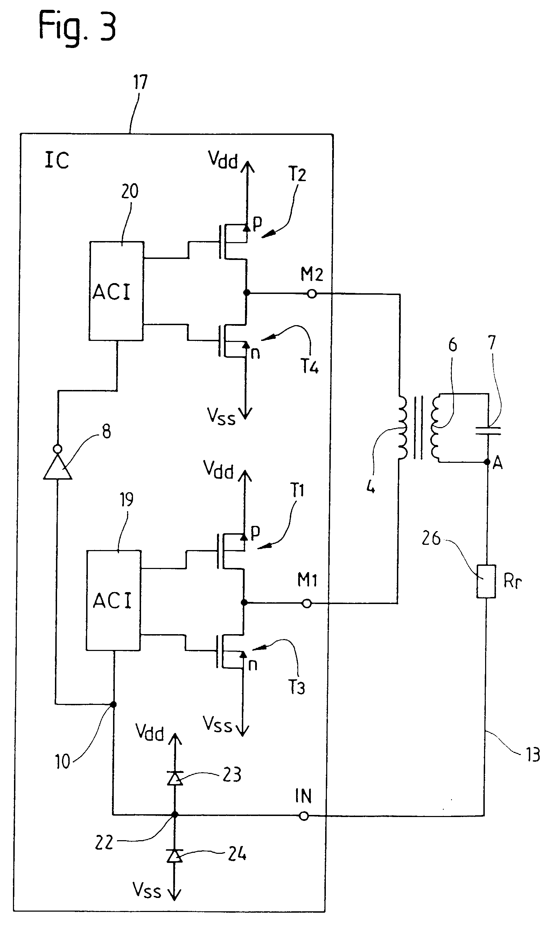

La figure 3 représente un troisième mode de réalisation de la présente invention. Comme pour le mode de réalisation de la figure 2, les éléments formant le circuit d'alimentation selon le présent mode de réalisation sont prévus pour être, de préférence, intégrés dans une puce. Seuls le transformateur 4, 6 et une résistance référencée 26 sont, dans cet exemple, réalisés sous forme d'éléments externes à la puce de circuit intégré. Le lecteur notera, en particulier, que toute la partie du circuit qui est intégrée dans la puce, c'est à dire la partie enfermée par le cadre référencé 17, peut être identique à la partie correspondante du circuit de la figure 2. Concrètement, cela revient à dire qu'on pourra utiliser la même puce 17 pour réaliser soit le circuit de la figue 2 soit le circuit de la figure 3.

Dans ce troisième mode de réalisation, au lieu de transmettre par la ligne de rétro-action 13 le potentiel d'une des armatures d'un condensateur 15 "image" de la feuille électroluminescente 7, on transmet directement le potentiel d'une des électrodes de la feuille électroluminescente.

Le principe de fonctionnement du circuit selon ce troisième mode de réalisation de la présente invention est tout à fait semblable à celui qui a été décrit en relation avec la figure 2. Notons, toutefois, qu'en raison du rapport de transformation, la tension entre les électrodes de la feuille électroluminescente est considérablement plus élevée que celle présente entre les bornes de la capacité image 15 du mode de réalisation de la figure 2. Pour éviter tous risques de surcharge au niveau de l'entrée des ACI (ou au niveau des diodes 23 et 24) on incorpore donc de préférence une résistance 26 à la ligne de rétro-action 13. En utilisant une résistance 26 de valeur suffisamment élevée, on produit une chute de tension qui supprime tout risque de surcharge.

## Revendications

1. Circuit d'alimentation pour une feuille électroluminescente (7) prévu pour être alimenté par une source d'une tension continue et notamment par une pile (2), comprenant un transformateur (4,6) comportant d'une part un enroulement primaire (4) et d'autre part un enroulement secondaire (6) prévu pour être connecté entre deux électrodes de ladite feuille électroluminescente (7) de manière à former une boucle LC résonnante, et des moyens de connexion (T1,T2,T3,T4,8,19,20) répondant à un signal de commande sensiblement périodique pour appliquer ladite tension continue audit enroulement primaire (4) de manière à engendrer un courant électrique d'intensité sensiblement périodique dans celui-ci, caractérisé en ce que les moyens de connexion sont prévus pour répondre audit signal de commande en commutant cycliquement entre un premier état où ledit courant circule dans l'enroulement primaire (4) dans un premier sens et un deuxième état où ledit courant circule dans l'enroulement primaire (4) dans l'autre sens.

2. Circuit d'alimentation selon la revendication 1, caractérisé en ce qu'il comprend encore des moyens d'asservissement (13,15) pour fournir ledit signal de commande, lesdits moyens d'asservissement comportant d'une part un condensateur (15) relié par une de ses bornes (15b) à une extrémité de l'enroulement primaire (4) du transformateur et prévu pour être relié en série avec celui-ci aux bornes de la source de tension via les moyens de connexion, et d'autre part une ligne de rétro-action (13) reliée à ladite une des bornes (15b) du condensateur.

3. Circuit d'alimentation selon la revendication 1, caractérisé en ce que ledit signal de commande est fourni par des moyens de commande (12) comprenant une base de temps.

4. Circuit d'alimentation selon la revendication 1, caractérisé en ce qu'il comporte encore des moyens d'asservissement (13,26) pour fournir ledit signal de commande, lesdits moyens d'asservissement comprenant une ligne de rétro-action (13) prévue pour être reliée à une des bornes de ladite feuille électroluminescente (7).

5. Circuit d'alimentation selon l'une des revendications précédentes, caractérisé en ce que lesdits moyens de connexion comprennent deux paires d'éléments interrupteurs (T1,T2,T3,T4), le premier et le deuxième élément d'une première paire étant connectés entre, d'une part, une première extrémité de l'enroulement primaire et, d'autre part, respectivement la borne positive et la borne négative de la source de tension, et le premier et le deuxième élément de l'autre paire étant connectés entre, d'une part, l'autre extrémité de l'enroulement primaire et, d'autre part, respectivement la borne positive et la borne négative de la source de tension, les moyens de connexion étant en outre arrangés de manière à ce que lorsqu'ils sont dans ledit premier état, le premier élément de la première paire conduit alors que le deuxième est bloqué et le premier élément de la deuxième paire est bloqué alors que le deuxième conduit, et à ce que lorsque les moyens de connexion sont dans ledit deuxième état, les éléments interrupteurs qui conduisent dans ledit premier état sont bloqués et les éléments interrupteurs qui sont bloqués dans ledit premier état conduisent.

6. Circuit d'alimentation selon la revendication 5, caractérisé en ce que lesdits éléments interrupteurs (T1,T2,T3,T4) sont des transistors de commutation.

## Patentansprüche

1. Versorgungsschaltung für eine Elektrolumineszenzlage (7), die dazu vorgesehen ist, durch eine Gleichspannungsquelle und insbesondere durch eine Batterie (2) versorgt zu werden, mit einem Transformator (4, 6), der einerseits eine Primärwicklung (4) und andererseits eine Sekundärwicklung (6) enthält, die dazu vorgesehen ist, an zwei Elektroden der Elektrolumineszenzlage (7) angeschlossen zu werden, um so eine LC-Resonanzschleife zu bilden, und Anschlußmitteln (T1, T2, T3, T4, 8, 19, 20), die auf ein im wesentlichen periodisches Steuersignal ansprechen, um die Gleichspannung an die Primärwicklung (4) in der Weise anzulegen, daß in ihr ein elektrischer Strom mit im wesentlichen periodischer Intensität erzeugt wird, dadurch gekennzeichnet, daß die Anschlußmittel dazu vorgesehen sind, auf das Steuersignal anzusprechen, um zwischen einem ersten Zustand, in dem der Strom in der Primärwicklung (4) in einer ersten Richtung fließt, und einem zweiten Zustand, in dem der Strom in der Primärwicklung (4) in der anderen Richtung fließt, zyklisch umzuschalten.

2. Versorgungsschaltung nach Anspruch 1, dadurch gekennzeichnet, daß sie außerdem Regelungsmittel (13, 15) enthält, die das Steuersignal liefern, wobei die Regelungsmittel einerseits einen Kondensator (15), der mit einem seiner Anschlüsse (15b) mit einem Ende der Primärwicklung (4) des Transformators verbunden ist und dazu vorgesehen ist, in Serie mit dem Transformator über die Anschlußmittel mit den Anschlüssen der Spannungsquelle verbunden zu werden, und andererseits eine Rückkopplungsleitung (13), die mit dem einen der Anschlüsse (15b) des Kondensators verbunden ist, enthalten.

3. Versorgungsschaltung nach Anspruch 1, dadurch gekennzeichnet, daß das Steuersignal durch Steuermittel (12) geliefert wird, die eine Zeitbasis enthalten.

4. Versorgungsschaltung nach Anspruch 1, dadurch gekennzeichnet, daß sie außerdem Regelungsmittel (13, 26) enthält, die das Steuersignal liefern, wobei die Regelungsmittel eine Rückkopplungsleitung (13) enthalten, die dazu vorgesehen ist, mit einem der Anschlüsse der Elektrolumineszenzlage (7) verbunden zu werden.

5. Versorgungsschaltung nach einem der vorangehenden Ansprüche, dadurch gekennzeichnet, daß die Anschlußmittel zwei Paare Ein/Aus-Schalterelemente (T1, T2, T3, T4) enthalten, wobei das erste und das zweite Element eines Paars einerseits zwischen ein erstes Ende der Primärwicklung und andererseits den positiven Anschluß bzw. den negativen Anschluß der Spannungsquelle geschaltet sind und das erste und das zweite Element des anderen Paars einerseits zwischen das andere Ende der Primärwicklung und andererseits den positiven Anschluß bzw. den negativen Anschluß der Spannungsquelle geschaltet sind, wobei die Anschlußmittel außerdem so beschaffen sind, daß, wenn sie im ersten Zustand sind, das erste Element des ersten Paars leitet, während das zweite gesperrt ist, und das erste Element des zweiten Paars gesperrt ist, während das zweite leitet, und daß, wenn die Anschlußmittel im zweiten Zustand sind, die Ein/Aus-Schalterelemente, die im ersten Zustand leiten, gesperrt sind, und die Ein/Aus-Schalterelemente, die im ersten Zustand gesperrt sind, leiten.

6. Versorgungsschaltung nach Anspruch 5, dadurch gekennzeichnet, daß die Ein/Aus-Schalterelemente (T1, T2, T3, T4) Schalttransistoren sind.

## Claims

1. Power supply circuit for an electroluminescent lamp (7) intended to be supplied by a source of a continuous voltage and notably by a battery (2), including a transformer (4, 6) comprising on the one hand a primary winding (4) and on the other hand a secondary winding (6) intended to be connected to two electrodes of said electroluminescent lamp (7) so as to form a resonant LC loop, and connecting means (T1, T2, T3, T4, 8, 19, 20) responding to a substantially periodic control signal to apply said continuous voltage to said primary winding (4) so as to generate an electric current of substantially periodic intensity in the latter, characterized in that the connecting means are intended to respond to said control signal by switching cyclically between a first state where said current circulates in the primary winding (4) in a first direction and a second state where said current circulates in the primary winding (4) in the other direction.

2. Power supply circuit according to claim 1, characterized in that it also comprises enslaving means (13, 15) for providing said control signal, said enslaving means comprising on the one hand a capacitor (15) connected by one of its terminals (15b) to one end of the primary winding (4) of the transformer and intended to be connected in series with the latter to the terminals of the voltage source via the connecting means, and on the other hand, a feedback line (13) connected to said one of the terminals (15b) of the capacitor.

3. Power supply circuit according to claim 1, characterized in that said control signal is provided by control means (12) comprising a time base.

4. Power supply circuit according to claim 1, characterized in that it also comprises enslaving means (13, 26) for providing said control signal, said enslaving means comprising a feedback line (13) intended to be connected to one of the terminals of said electroluminescent lamp (7).

5. Power supply circuit according to one of the preceding claims, characterized in that said connecting means comprises two pairs of switching elements (T1, T2, T3, T4), the first and the second elements of a first pair being connected between, on the one hand, a first end of the primary winding (4) and, on the other hand, respectively the positive terminal and the negative terminal of the voltage source, and the first and the second elements of the other pair being connected between, on the one hand, the other end of the primary winding and, on the other hand, the positive terminal and the negative terminal of the voltage source respectively, the connecting means being also arranged so that when they are in said first state, the first element of the first pair conducts, whereas the second is blocked and the first element of the second pair is blocked whereas the second conducts, and so that when the connecting means are in said second state, the switching elements which conduct in said first state are blocked and the switching elements which are blocked in said first state conduct.

6. Power supply circuit according to claim 5, characterized in that said switching elements (T1, T2, T3, T4) are switching transistors.
